# EUROPÄISCHE PATENTSCHRIFT

(11) **EP 2 631 469 B1**
(45) Veröffentlichungstag und Bekanntmachung des Hinweises auf die Patenterteilung: **17.01.2018**
(21) Anmeldenummer: 13156489.0
(22) Anmeldetag: 23.02.2013
(51) Int. Cl.: F03D 7/02

(54) **Verfahren und Einrichtung zur Abbremsung einer Windenergieanlage in einem Notfall**
Method and device for braking a wind energy assembly in an emergency
Procédé et dispositif destinés à freiner une installation éolienne en cas d'urgence

(30) Priorität: 24.02.2012 DE 102012101484
(43) Veröffentlichungstag der Anmeldung: 28.08.2013
(73) Patentinhaber: SETEC GmbH, 01468 Boxdorf-Dresden (DE)
(72) Erfinder: Fahrner, Fritz, 01468 Boxdorf-Dresden (DE)
(74) Vertreter: Weissfloh, Ingo

(56) Entgegenhaltungen:
- WO-A1-99/23384
- WO-A1-03/091570
- US-A- 4 701 104

## Beschreibung

Die vorliegende Erfindung betrifft eine Windenergieanlage mit einer Rotornabe und mindestens einem an einem Drehlager verbundenen Rotorblatt. Mittels mindestens einem elektrischen, pneumatischen und/oder hydraulischen Stellantrieb kann jedes Rotorblatt um seine Längsachse gedreht, und an einer definierten Position mittels einer Bremse festgehalten werden, wobei die Bremse mit dem Stellantrieb in Verbindung steht. Zum Stellantrieb in Verbindung stehend ist mindestens ein Getriebe vorhanden, das an einem Drehlager dreht. Das Drehlager besteht aus einem inneren und äußeren Ring, wobei ein Ring an der Nabe verschraubt wird und der andere das Rotorblatt aufnimmt. Durch Drehen des Ringes, an dem das Blatt montiert ist, lässt sich das Rotorblatt um seine Längsachse verdrehen. Dieser Ring kann der Außen- oder der Innenring des Lagers sein. Um die vom Wind einwirkende Leistung in einem Notfall oder zum Unterbrechen oder zum Reduzieren der Energieerzeugung zu begrenzen, wird das Rotorblatt in die Position gedreht, bei der eine geringere Windleistung vom Rotor aufgenommen wird. Damit jedes Rotorblatt eine autarke Verdrehung um seine Längsdrehachse auch bei einer Störung der Netzversorgung gewährleisten kann, besitzt jeder Antrieb einen oder mehrere eigenständige Energiespeicher, die im Notfall einen oder mehrere Rotorblattantriebe (Stellantriebe) an jedem Rotorblatt mit Energie versorgen und eine oder mehrere Blatt-Haltebremsen öffnen.

Die Rotorblattverstellung einer Windenergieanlage dient zur Drehzahlregelung (Leistungsregelung) der Anlage im Nennleistungsbereich und auch als aerodynamisches Bremssystem. Dazu besitzt jedes Rotorblatt einen oder mehrere Stellantriebe. Beim Pitchsystem wird dazu auf eine Winkelstellung zwischen Fahnenlage und Arbeitsposition gedreht, und beim System mit dem Prinzip Aktiv-stall in entgegengesetzter Richtung mit Strömungsabriss.

Im Falle einer Störung ist es vorteilhaft, möglichst alle Rotorblätter in die Position mit geringer Leistungsaufnahme zu drehen. Eine Variante bestehender Systeme zur Rotorblattverstellung umfasst für jedes Rotorblatt ein oder mehrere elektrische Antriebsmodule mit einem oder mehreren verbundenen Stellmotoren und die zum Festhalten der Position mit einer oder mehreren Haltebremsen ausgeführt sind. Dies ermöglicht, dass die Rotorblätter einzeln verstellt und gehalten werden können. Allerdings sind bei nahezu allen bekannten Stellantrieben die Haltebremsen für Rotorblätter derart ausgelegt, dass eine Abschaltung der Ansteuerung der Bremsen die Welle des Stellantriebes blockiert, und so die Gefahr besteht, dass die Blattverstellung nicht mehr oder nur ungenügend ausgeführt werden kann, sofern zum Beispiel eine Zuleitung zu einer Bremse unterbrochen wird. Insbesondere auch im Falle, dass ein Stellantrieb kein Drehmoment abgibt, bleibt das entsprechende Rotorblatt in maximaler Arbeitsstellung. Bei einem System, das mit stromlos offenen Bremsen arbeitet, besteht der Nachteil, dass diese das Rotorblatt nicht gegen Verdrehung in die Richtung festhalten können, in der ein weiterer Antrieb des Rotors erfolgt, im Falle, dass die Ansteuerung der Bremsspulen nicht möglich ist.

Eine Fehlfunktion des Rotorblatt-Verstellantriebs kann somit zu einer für die gesamte Windenergieanlage kritischen Situation führen. Insbesondere eine Überschreitung der zulässigen Rotordrehzahl kann eine Gefährdung für Personen oder eine erhebliche oder totale Anlagenbeschädigung verursachen.

Gemäß dem Stand der Technik sind im Antriebstrang für Pitchantriebe vorhandene Bremsen derart ausgeführt, dass die Bremsspule mit Reibbelag feststehend, z.B. mit dem Motorgehäuse verbunden ist, und die Bremsnabe zusammen mit der Motorwelle dreht, und beim Schließen der Bremse somit eine Stillsetzung der Motorwelle mit dem damit verbundenen Getriebe und Rotorblatt bewirkt. Allerdings kann eine oder mehrere Bremsen an einem Stellsystem für die Rotorblätter, auch z.B. zwischen Motor und Getriebe oder über einen Zahnriemenantrieb mit dem Rotorblatt verbunden sein.

In der WO 99/23384 oder in der WO 03/091570 wird eine Vorrichtung zum Verstellen von an einer Rotornabe einer Windkraftanlage drehbar gelagerten Rotorblättern beschrieben, die einen Antrieb zum Verdrehen der Rotorblätter aufweist. Die Rotorblattverstellung kann auch als Bremssystem eingesetzt werden, indem die Rotorblätter zur Abschaltung der Windkraftanlage in Richtung Segelstellung verdreht werden, und so die Anlage an Leistung bzw. Drehzahl verliert. Um das Abbremsen der Anlage mittels Rotorblattverstellung auch bei Ausfall der Leistungsversorgung sicherzustellen, ist mit den Rotorblättern eine aktivierbare Rücklaufsperre zur Blockierung der Motorwelle verbunden, welche ein Verdrehen der Rotorblätter aus der Segelstellung in die Betriebsstellung verhindert. Die Sperre ist im Normalbetrieb deaktiviert und wird bei Ausfall der Leistungsversorgung automatisch aktiviert, wodurch sich die Rotorblätter nur mehr in die Segelstellung drehen können und dort gehalten werden.

In der Schrift EP 1 763 126 B1 wird eine Vorrichtung zum Steuern des Anstellwinkels eines Rotorflügels einer Windkraftanlage beschrieben, wobei die Vorrichtung folgende Bauteile aufweist: ein Anstellwinkel-Steuersystem mit Leistungsumformer, einen Gleichspannungskreis mit einem Kondensator zur Energielieferung an das Anstellwinkel-Steuersystem, eine Wechselstromquelle zur Energielieferung an den Gleichspannungskreis und eine Reservebatterie zur Energielieferung an das Steuersystem bei Wechselstromausfall.

Die verschiedenen Varianten dieser Vorschläge besitzen erhebliche Nachteile, so z. B. besitzt das System mit zuschaltbarem Freilauf den Nachteil, dass das volle Motordrehmoment blockiert werden muss, und eine harte Blockierung in einer Richtung stattfindet, und benötigt noch eine zusätzliche Kupplung zur Aktivierung, oder eine Hilfs-Stromversorgung. Die Systemen mit stromlos geschlossener Bremse beherrschen kein redundantes Notfallverfahren bzw. beschreiben keine wirklich redundante Notfalleinrichtung, für den Fall einer Störung im Stellsystem, z.B. ein Defekt des Stellmotors oder eine sich nicht öffnende Bremse.

Der Erfindung liegt die Aufgabe zugrunde, eine zusätzliche Einrichtung als "redundante Notfalleinrichtung für jedes Rotorblatt" zu schaffen, für den Fall, dass eine oder mehrere Standard Notfalleinrichtungen wegen einer Störung die Verstellung des Einstellwinkels an einem oder mehreren Rotorblättern in eine Position zur Leistungsbegrenzung nicht ermöglichen.

Diese Probleme sollen dadurch gelöst werden, dass jede vorhandene Bremse öffnet oder offen gehalten wird, sobald ein Drehmoment an der Rotorblatt-Längsdrehachse versucht das Rotorblatt in Richtung eines geringer werdenden Antriebsmomentes für den Rotor zu verdrehen, und im Falle eines Drehmomentes, das ein Verstellen eines Rotorblattes in die maximaler Arbeitsstellung versucht, soll diese Drehbewegung bereits bei Beginn gestoppt werden, um somit für den Fall, dass die Notfallverstellung versagt, trotzdem für das betreffende Rotorblatt eine Verstellung in die aerodynamisch bremsende Position (Fahnenlage)zu erreichen. Beim Stellantrieb für Aktive-stall erfolgt das Verdrehen jedes einzelnen Rotorblattes zur aerodynamischen Abbremsung des Rotors in die Richtung mit Strömungsabriss. Im Normalbetrieb soll die Zusatzeinrichtung keinen Einfluss auf den Betrieb nehmen und auch die Systemkosten sollen nur unwesentlich beeinflusst werden.

Die Aufgabe wird durch das erfindungsgemäße Verfahren und durch die erfindungsgemäße Einrichtung gelöst, die im Falle einer gestörten Notfallverstellung an einem oder mehreren Rotorblättern die notwendige aerodynamische Abbremsung durch drehen der Rotorblätter trotzdem erwirkt, durch gezieltes öffnen oder schließen der Haltebremsen, je nachdem in welcher Drehrichtung an der Rotorblatt-Längsdrehachse ein Drehmoment entsteht.

Diese Funktionen werden nach Abschaltung eines Hubmagneten erreicht, der eine Verbindung mit einer oder mehrerer an jedem Rotorblatt-Antriebstrang vorhandener Bremsen besitzt, die in der Ausführung "stromlos geschlossen" einen Handlüfthebel zur zwangsweisen Lüftung besitzt und in der Ausführung "stromlos geöffnet" einen Bremshebel besitzt, der die Bremse bei Bedarf zwangsweise schließt. Um dies zu erreichen wird die stromlos geschlossene Bremse derart montiert, dass deren Gehäuse in einem geringen Winkel verdreht werden kann und nach fehlender Krafteinwirkung am Handlüfthebel durch Abschaltung des Hubmagneten eine Drehung des Bremsengehäuses erfolgen kann. Diese Verbindung ermöglicht bei der stromlos geschlossenen Bremse eine Verstellung des Handlüfthebels durch Federzug oder Gestänge und Drehrichtungserkennung oder durch Eigenantrieb bei geschlossenem Bremsbelag, in die Hebelposition "Bremse mechanisch gelüftet" und bewirkt bei Bedarf ein mechanisch betätigtes Öffnen des Bremsbelages.

Bei einer stromlos offenen Bremse bewirkt die Abschaltung des Hubmagneten ebenfalls die Freigabe der Drehbewegung des Bremsengehäuses durch das Lösen eines Arretierungshebels, und in Abhängigkeit der Drehbewegung des Antriebs erfolgt durch Federkraft und Drehrichtungserkennung das Freigeben oder Blockieren der Bremse durch Verstellung mindestens eines Handbremshebels als ein die Bremse schließender Hebel.

Im Falle, dass bei der stromlos geschlossenen Bremse ein Drehmoment durch das Rotorblatt in Richtung maximaler Arbeitsstellung entsteht, wird das drehbar gelagerte Bremsengehäuse, mit je einen Anschlag rechts und links, mittels eines Kipphebels, der von einem auf der Welle des Antriebs drehenden Mitnehmer gedreht wird, vom Anschlag weggedreht, wodurch der mit der Drehbewegung verbundene Handlüfthebel wieder in seine Neutralstellung gesetzt wird, und so sich die Bremsbeläge schließen. Solange das Drehmoment für die Blatt-Drehbewegung in Arbeitsrichtung ansteht, wird der Handlüfthebel durch den geschlossenen Reibbelag der Bremse in der Stellung "Neutral" gehalten, da das Drehmoment in dieser Richtung das Bremsengehäuse in die Richtung gedreht hat, die den Handlüfthebel mittels der Drehung des Bremsengehäuses in Neutralstellung bringt.

Im Falle, dass ein Stellmotor kein Drehmoment erzeugt, wird das an der Rotorblatt-Längsdrehachse durch Schwerkraft sowie zyklisch mit der Rotordrehung entstehende Drehmoment genutzt, um die Verdrehung des Rotorblattes beim Pitchsystem in Fahnenrichtung vorzunehmen und beim System aktiver Stallregelung in Richtung mit zunehmendem Strömungsabriss. Bei Verwendung einer stromlos offenen Bremse bewirkt die Abschaltung des Hubmagneten, dass bei einer Drehbewegung des Rotorblattes in Richtung reduzierter Aufnahme der Windenergie das Gehäuse der Bremse nicht verdreht wird bzw. in die Stellung gezogen wird, in der keine Betätigung des Bremshebels stattfindet. Beim Wechsel der Drehrichtung erfolgt sofort durch einen Kipphebel ein Aufheben der Federkraft, die den Handbremshebel gehalten hat und ein Verdrehen des Bremsengehäuses verbunden mit dem Schieben oder Ziehen des Handbremshebels in die Stellung "Bremse geschlossen" und solange die Richtung des am Antrieb oder Rotorblatt anstehenden Drehmomentes nicht geändert wird, wird das Bremsengehäuse und somit der mit der Drehbewegung des Bremsengehäuses verbundene Handbremshebel in der Stellung "Bremse geschlossen" gehalten.

Der erfindungsgemäße Betrieb des beschriebenen Systems an einer Windkraftanlage umfasst dabei folgende Fälle:
a) Bei jedem Automatikstart der Anlage findet beim Anlauf des Rotors für jedes Rotorblatt ein Funktionstest der redundanten mechanischen Bremsenfreigabe statt. Dies wird in Abhängigkeit der Rotorstellung ausgeführt und beim Versagen des Tests erfolgt eine Serviceanforderung.
b) Bei Verwendung einer stromlos geschlossenen Bremse wird sobald das Rotorblatt mittels Freigabe durch die mechanische Lüftung der Bremse in den Bereich geringer Drehmomententwicklung für den Rotor gedreht hat, wird mittels einem Anschlagsensor der Handlüfthebel der Bremse in die Neutralposition zurückgestellt, wodurch die Winkelverstellung des Rotorblattes gestoppt wird. Eine Funktionskontrolle der redundanten und richtungsabhängigen Freigabe der Drehbewegung kann durch die Steuerung zur Deaktivierung und Aktivierung des Hubmagneten und somit der Handlüftung erfolgen.
c) Bei Verwendung einer stromlos offenen Bremse wird beim Erreichen einer Rotorblattstellung in der ein geringer Antrieb des Rotors entsteht, die Bremsnabe durch einen mechanischen Taster derart bewegt, dass die Bremse schließt, und ein Abbremsen der Rotorblattdrehung erfolgt.
d) Die Abschaltung des Hubmagneten an einem Antrieb bei einer Störung des Notfallsystems, löst die mechanische Steuerung der Bremse aus, d.h. das Öffnen und Schließen erfolgt abhängig von der Drehrichtung der Motorwelle und die Freigabe der Drehrichtung erfolgt abhängig von der gewählten Variante der Blattverstellung und der Antriebsrichtung damit die Verstellung abbremsend wirkt.
e) Im Falle der Verwendung eines elektrischen Antriebsystems führt jeder Stromrichter (zur Regelung eines Pitchmotors) fortlaufend eine Drehmomentüberwachung durch, die zur Erkennung einer geschlossenen (sich nicht öffnenden) Bremse dient, oder auch um einen erhöhten Drehmomentbedarf zur Drehung eines Rotorblattes zu erkennen, und ZB in der Folge die Anlage in einen sicheren Betriebszustand zu bringen . Dadurch wird auch ein mögliches erhöhtes Drehmoment während der Winkelverstellung erkannt. Sofern der Antrieb gegen die nicht geöffnete Bremse arbeitet, löst die Steuerung selbstständig die Verriegelung aus (schaltet den Hubmagneten ab), um das mechanische und drehrichtungsabhängige redundante Öffnen der Bremse einzuleiten. Im Falle der stromlos offenen Bremse wird eine erkannte Antriebsblockierung durch die Bremse behoben durch eine zweite Abschaltmöglichkeit der Versorgungsspannung für die Bremse, und somit ebenfalls die Bremse in Abhängigkeit der Drehmomentrichtung geschlossen oder geöffnet.
f) Während des Transports, der Montage, der Installation und bei Servicearbeiten kann das mechanische Öffnen der stromlos geschlossenen Bremse mechanisch verriegelt werden. Für Servicearbeiten besteht am zweiten Wellenende des Pitchmotors eine kraftschlüssige Blockierung der Drehbewegung. Bei Verwendung von Bremsen, die stromlos offen sind, kann mittels mechanischer Einrichtung in Form einer Arretierung des Bremshebels ein Schließen der Bremse hergestellt werden für die Fälle in denen für die Bremse keine Stromversorgung besteht oder eine Störung der Stromversorgung vorliegt.
g) Eine Verstärkung des durch Schwerkraft und möglicherweise durch Aerodynamik entstehenden Antriebsmomentes zur Blattverstellung erfolgt durch die Generatorlast der Windenergieanlage. Dabei wird eine Rotorabbremsung im Falle einer Störung des Stellsystems durch die Generatorbelastung gemäß Kennlinie verstärkt, bzw. im Falle, dass keine Leistung ins Netz gespeist werden kann, übernimmt dies eine Ballastschaltung oder ein Energiespeicher, die mit dem Generator-Umrichtersystem verbunden sind. Diese Einrichtung kann direkt am Zwischenkreis des Umrichters oder zwischen Umrichter und Generator angeordnet sein, oder auf der Netzseite.

Ausführungsbeispiele der Erfindung als Pitchsystem sind in den Zeichnungen dargestellt und werden im Folgenden näher beschrieben. Es zeigen:
Fig. 1 die kombinierte Darstellung einer Seiteansicht und einer Schnittdarstellung der Einrichtung zur Abbremsung einer Windenergieanlage in einem Notfall im Zustand Handlüftung in Neutral gestellt durch Anschlag am Rotorblatt in Fahnenlage, entspricht auch der Stellung mit angezogenem Hubmagneten,
Fig. 2 die kombinierte Darstellung einer Seitenansicht und einer Schnittdarstellung der Einrichtung zur Abbremsung einer Windenergieanlage in einem Notfall im Zustand Handlüftung aktiviert nach Abfall des Hubmagneten,
Fig. 3 die kombinierte Darstellung einer Seitenansicht und einer Schnittdarstellung der Einrichtung zur Abbremsung einer Windenergieanlage in einem Notfall im Zustand Kipphebel aktiviert; die Rückstellung der Handlüftung in Richtung "Neutral" bei Verdrehung der Welle in Richtung Arbeitsposition hat eingesetzt und

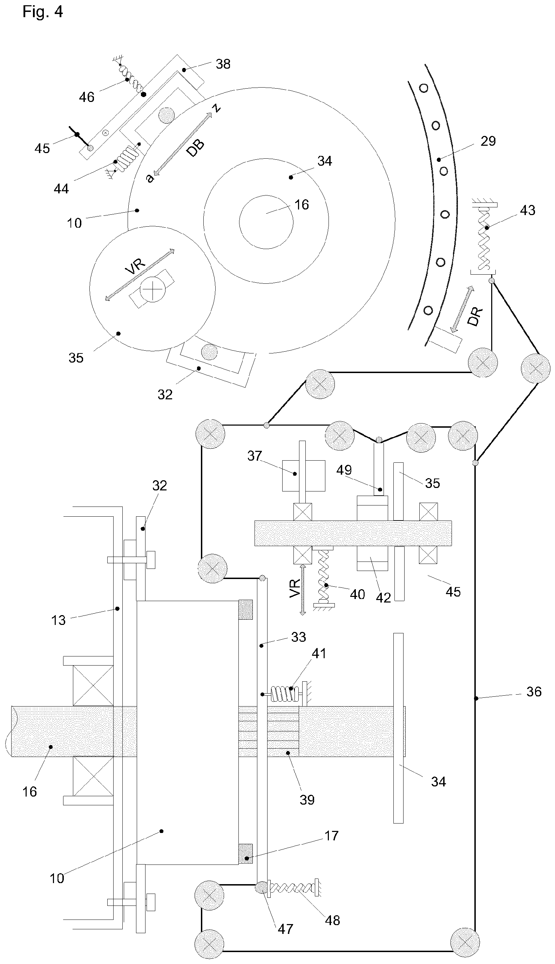

Fig. 4 die kombinierte Darstellung einer Seitenansicht und einer Schnittdarstellung der Einrichtung zur Abbremsung einer Windenergieanlage in einem Notfall mit stromlos offener Bremse.

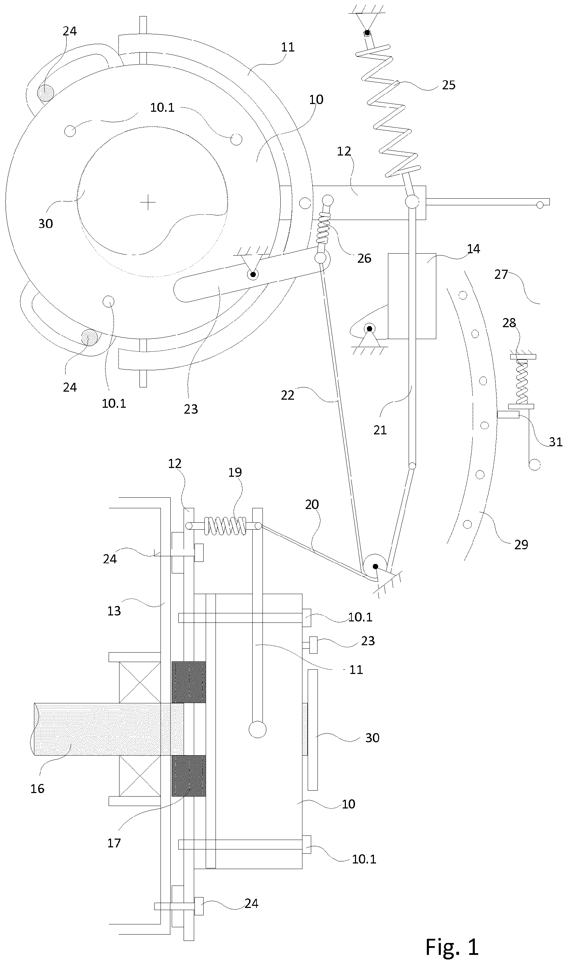

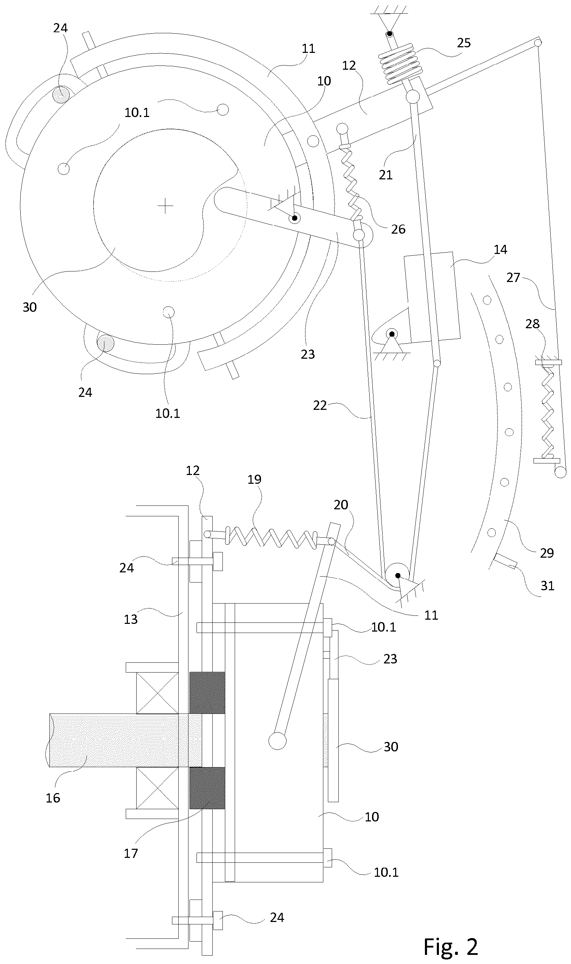

Eine zusätzliche Notfallverstellung des an der Nabe drehbar gelagerten Rotorblattes 29 wird durch die Abschaltung eines Hubmagneten 14 erreicht. Dazu besitzt das Wellenende eines Stellmotors 13 eine Haltebremse 10 mit einem Reibbelag 17, die mittels Schrauben 10.1 an einer Flanschplatte 12 befestigt ist. Zudem besitzt die Bremse 10 einen Handlüfthebel 11 mit einer mit geringer Kraft in Neutralstellung ziehenden kleinen Feder 19, wie in Figur 1 dargestellt.
Die Flanschplatte 12 ist mit dem Gehäuse des Stellmotors 13 mittels einer festen Verbindung 24 drehbar verbunden. Durch eine Drehbewegung der Flanschplatte 12 wird ein kleiner Drehwinkel am Gehäuse der Haltebremse 10 freigegeben.
Bei einer Störung des Notfallsystems wird der die Verdrehung des Gehäuses der Haltebremse 10 blockierende Hubmagnet 14 stromlos geschaltet und zieht mittels der starken Feder 25 und der Verbindung 21 den Handlüfthebel 11 in die Stellung "gelüftet" (Figur 2), sofern eine Verdrehung in Richtung Fahnenlage benötigt wird und im Falle, dass das elektrische Öffnen der Haltebremse 10 versagt und die Haltebremse 10 die Motorwelle 16 blockiert oder dass ein oder mehrere Antriebe 13 kein Drehmoment entwickeln. Bei einer Drehbewegung der Motorwelle 16 in Richtung Fahnenlage und bei geschlossenem Bremsbelag 17 der Haltebremse 10 wird das Gehäuse der Haltebremse 10 durch die Motorwelle 16 im geringen Winkel gedreht. Dieser Drehwinkel wird benutzt, um einen Kipphebel 23 in der Stellung "Neutral" zu halten, durch einen Seilzug 22 mit Federspannung umzulegen und gleichzeitig den Handlüfthebel 11 der Haltebremse 10 mittels eines weiteren Seils 20 in die Stellung "gelüftet" zu ziehen. Der Kipphebel 23 wird im störungsfreien Betrieb mittels einer Hilfsfeder 26 außerhalb des Eingriffs des Mitnehmers 30 gehalten. Sofern sich die Richtung des gegen den Uhrzeiger drehenden Mitnehmers 30 nicht mehr ändert, wird diese Position gehalten, bis ein mechanischer Endlagentaster 28 mittels des Anschlages 31 am Rotorblatt 29 die Fahnenstellung des Rotorblattes 29 erkennt und den Handlüfthebel 11 gegen die Federkraft über den Seilzug 27 in Neutralstellung zieht. Dadurch wird die redundante Lüftung der Haltebremse 10 deaktiviert und die Haltebremse 10 ist nur noch elektrisch steuerbar.

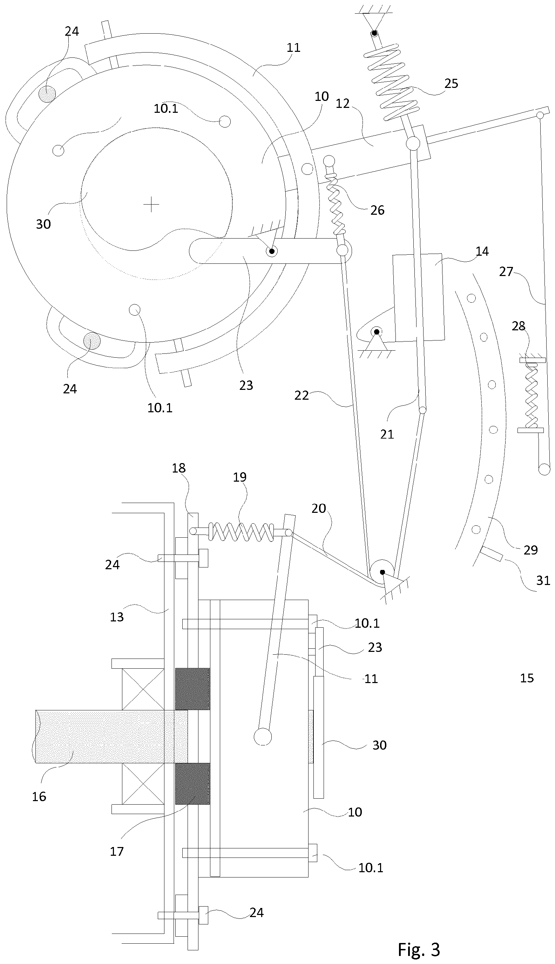

Sofern das Rotorblatt 29 und damit die Motorwelle 16 eine Drehung in Richtung Arbeitsposition entwickelt, der Mitnehmer 30 dreht im Uhrzeigersinn, aktiviert der Mitnehmer 30 die Rückstellung des Kipphebels 23 und durch das Ziehen des Seilzuges 22 wird die starke Feder 25 wieder gespannt und die kleine Feder 19 zieht den Handlüfthebel 11 in Neutralstellung, wie in Figur 1 dargestellt. Eine Zwischenposition dieser Funktion zeigt Figur 3. Gleichzeitig wird das Gehäuse der Haltebremse 10 wieder in die Stellung gedreht (im Uhrzeiger), in der es mit geschaltetem Hubmagneten 14 gegen Verdrehen gehalten werden kann. Der Kipphebel 23 befindet sich, durch die Hilfsfeder 26 gezogen, jetzt wieder außerhalb des Eingriffsbereichs des mit der Motorwelle 16 drehenden Mitnehmers 30. Somit lässt sich die Haltebremse 10 redundant öffnen, durch das Antriebsmoment des Antriebes 13 mit der Motorwelle 16 oder durch Antriebsmomente aus der Schwerkraft und zusätzlich gegebenenfalls vorhandener Aerodynamik an der Drehachse des Rotorblattes 29.

Zur reibschlüssigen Verhinderung einer Drehbewegung am Rotorblatt wird beim System mit stromlos geschlossener Bremse Z. B. für Wartungsarbeiten oder Transport der Handlüfthebel 11 in der Neutralstellung verriegelbar, bei der stromlos offenen Variante der Bremse 10 wird die Stellung der angedrückten Ankerplatte 33 blockierbar. Dies verhindert eine ungewollte Freigabe der Motorwelle 16.

Für die Freigabe der Haltebremse sind folgende weitere Varianten vorgesehen:
a) Der Handlüfthebel 11 wird derart bewegt, dass nur etwa zu 90 % Bremsmoment weggenommen werden. Dadurch bleibt die Verdrehung der Haltebremse 10 bestehen, solange sich die Drehrichtung der Motorwelle 16 nicht ändert. Bei der Einstellung der Gesamtmechanik der Haltebremse 10 ist es erforderlich, dass diese den Reibbelag 17 nicht komplett löst und somit ein kleines Drehmoment am Gehäuse der Haltebremse 10 bestehen bleibt, welches den Handlüfthebel 11 in gelüfteter Stellung hält.
b) Als Variante wird eine weitere Federdruckbremse (Hilfsbremse) verwendet, deren Drehmoment auf einen kleinen Wert gestellt ist und deren Gehäuse mit der Haltebremse 10 als Hauptbremse 10 verbunden ist. Die Hilfsbremse wird bei einer Störung nicht mechanisch geöffnet. Somit wird bei Drehung der Motorwelle 16 in Richtung Fahnenlage das Gehäuse der Hauptbremse 10 in der Stellung "Handlüfthebel aktiviert" gehalten. Beim Wechsel der Drehrichtung wird das Gehäuse der Hauptbremse 10 in Richtung "Bremshebel Neutralstellung" gedreht, wodurch die Hauptbremse 10 schließt, sofern keine elektrische Erregung geschaltet ist. Dies ermöglicht das Drehen der Motorwelle 16 in Richtung der Fahnenlage. Eine Verdrehung der geschlossenen Bremse in Richtung Arbeitsposition lässt die Bremse geschlossen und hält die aktuelle Position.
c) Eine zwangsweise Funktion mit dem Öffnen und Schließen der Haltebremse 10 kann auch erreicht werden mittels einer stromlos offenen Bremse. Dieser Typ schließt den Bremsbelag 17 bei Ansteuerung und öffnet diesen stromlos. Hierzu wird bei Drehbewegung Richtung Arbeitsstellung und sobald die Fahnenstellung erreicht wird, das Schließen der Reibbeläge 17 durch Federkraft betätigt. Das Erkennen und Auslösen der Funktion "sperren Rotorblatt Drehbewegung in Richtung Arbeitsposition" oder Festhalten in Fahnenlage, wird ebenfalls durch einen Hubmagneten freigegeben und durch drehrichtungsabhängige Schwenkbewegung des Gehäuses der Haltebremse 10 und Auslösen mit dem Kipphebel 23 erreicht. Dieselbe Wirkungsweise besitzt ein Verstellsystem bei dem die Leistungsaufnahme des Rotors durch Strömungsabriss an den Rotorblättern 29 geregelt wird, und dann die Rotorblätter 29 im Stellbereich festhält in dem die geringste Windenergie auf die Rotorblätter 29 und Rotordrehbewegung wirkt.

Beim Einsatz einer stromlos offenen oder einer stromlos geschlossenen Haltebremse 10 erfolgt ein analoger Betrieb der Einrichtung, jedoch mit dem Unterschied, dass bei einer stromlos geschlossen Haltebremse 10 ein Handlüfthebel 11 benötigt wird, der die Bremsung aufhebt, und bei einer stromlos offenen Haltebremse 10 ein schließen des Reibbelags 17 mit der Bremsnabe 33 durch eine Zusatzeinrichtung benötigt wird.

Bei der Verstellung der Rotorblätter 29 soll ausgenutzt werden, dass während einer Umdrehung des Rotors an jedem Rotorblatt 29 ein durch Wind und Schwerkraft des Rotorblattes 29 entstehendes Drehmoment erkannt wird, das abwechselnd einmal in Richtung Arbeitsposition und dann wieder in Richtung Fahnenlage entsteht, wobei die Rotorblätter 29 entsprechend gestaltet sind, dass der Schwerpunkt um deren Drehachse außerhalb des Zentrums liegt.

Die vorliegende Erfindung ist als Ergänzung zu bekannten Sicherheitseinrichtungen zu sehen, um im Störungsfall bei dem ein oder mehrere Stellantriebe 13 kein Drehmoment abgeben, das entsprechend betroffene Rotorblatt 29 trotzdem schrittweise in Richtung Fahnenlage drehen zu lassen, und somit die Gefahr einer Anlagenbeschädigung bei Verwendung von Notfalleinrichtungen gemäß dem Stand der Technik erheblich gemindert wird.

Die Ausgestaltung und der Aufbau und die Funktion einer Variante mit Verwendung einer oder mehrerer stromlos offener Haltebremsen 10 im Antriebsstrang für ein Rotorblatt 29 wird im folgenden beschrieben.

Im einem Fall mit einer Störung, die ein Aufbringen eines Drehmomentes durch einen oder mehrere Stellantriebe 13 im Antriebstrang für ein Rotorblatt 29 nicht ermöglicht, wird oder werden auch die Bremse 10 nicht mehr schließbar und somit wird das Rotorblatt 29 bei jeder Rotorumdrehung hin- und herpendeln zwischen aerodynamischer Bremsung und aerodynamischem Antrieb des Rotors. Somit wäre eine Blattwinkelverstellung zur fortlaufenden Reduzierung der Rotordrehzahl nicht gegeben (keine weitere aerodynamische Bremsung des Rotors). Dies zu beheben, besitzt jeder der vorhandenen Stellmotoren 13 einen Motorflansch 13 und hat auf der drehenden Welle 16 entweder ein Zahnrad 34 oder ein Reibrad 34 angeordnet, in oder an das radial ein weiteres äußeres Rad 35 eintauchen kann oder angedrückt werden kann und somit eine Drehbewegung aufnehmen kann. Im störungsfreien Betrieb wird das verschiebbare äußere Rad 35 mittels eines Hub- oder Schubmagneten 37 außerhalb dem Eingriff zu dem Rad 34 gehalten, das in Verbindung mit dem Drehen des Rotorblattes 29 steht. Die Anlenkung des verschiebbaren Rades 35 erfolgt durch Federkraft der Feder 40, sobald diese von dem Magneten 37 nicht mehr gehalten wird. Eine erkannte Störung verursacht ebenfalls, dass das Gehäuse der Haltebremse 10 in einem geringen Drehwinkel freigegeben wird durch das Lösen des mittels Feder 46 gezogenen Arretierungshebel 38, wobei dies mit dem identischen Elektromagneten 37 ausgeführt werden kann, der das verschiebbare Rad 35 frei lässt und es somit zu einem Reibkontakt oder Eingriff von Rad 35 in das Rad 34 kommt. Sofern keine Störung im Pitchsystem vorliegt, wird der Arretierungshebel 38 durch das Zugseil 45 gehalten, das durch den ziehenden Hubmagneten 37 gespannt wird, und somit eine Drehbewegung des Bremsengehäuses 10 verhindert, und ein Standard Verhalten der Elektromagnetbremse erreicht. Die Abschaltung des Elektromagneten 37 bewirkt also, dass eine kraft- oder formschlüssige Verbindung zur Motorwelle 16 hergestellt wird, und dass eine mögliche Verdrehung des Bremsengehäuses 10 mit einem definierten Drehwinkel ermöglicht wird, und sich daraus mechanisch eine Drehmomentrichtung am Rotorblatt detektieren lässt, in deren Folge die Bremse 10 mechanisch gesteuert wird. Neben der mechanischen Erkennung ist auch eine messtechnische Erkennung denkbar, mit dem Nachteil, dass Elektronik benötigt wird.

Zu unterscheiden sind nun die Betriebsfälle
a) drehen des Rotorblattes 29 in Richtung Arbeitsstellung und
b) drehen des Rotorblattes 29 in Richtung Fahnenlage, bzw. in die Richtung, die eine Reduzierung der Aufnahme der Windenergie bewirkt.

Im Fall a) führt eine mögliche Drehbewegung der Motorwelle 16 in Richtung Arbeitslage dazu, dass ein mit dem Verschieberad 35 verbundener Seilzug 36 über den Hebel 49 die Bremsnabe 33 zieht und so die in der Verzahnung 39 formschlüssig verschiebbare Bremsnabe 33 gegen den mit dem Bremsengehäuse 10 verbundenen Reibbelag 17 zieht, und dabei die Feder 41 spannt. Mit dem Schließen des Bremsbelages 17 erfolgt eine geringe Verdrehung des Bremsengehäuses 10 bis zum Anschlag DBz, und anschließend wird die Motorwelle 16 abgebremst. Der Seilzug 36 besitzt dazu eine schleifende Verbindung 47 als Schleifkontakt 47 zu der mit der Welle 16 drehenden Bremsnabe 33, und der Schleifkontakt wird mittels der Feder 48 wieder aufgehoben, nachdem der Handbremshebel 49 nicht mehr am Seil 36 zieht und somit die Bremsnabe 33 nicht mehr gegen den Reibbelag 17 gedrückt wird.

Damit die Verdrehung des Bremsengehäuses 10 stattfinden kann, wird gleichzeitig mit der Abschaltung des Magneten 37 das Gehäuse der Haltebremse 10 aus einer gegen verdrehen arretierten Position freigegeben. Bei störungsfreiem System ist diese Verriegelung mittels Arretierungshebel 38 gegeben, der durch den Zug des Hubmagneten 37 über das Zugseil 45 die Feder 46 spannt, und den Arretierungshebel 38 am Bremsenflansch 32 bzw. Bremsengehäuse 10 einrastet und somit ist bei angezogenem Hubmagneten 37 und deaktivierter Verbindung der Räder 34 und 35 keine Verdrehung des Bremsengehäuses möglich. Das Rotorblatt 29 kann sich nun nicht in die Richtung drehen, bei der ein erhöhtes Drehmoment durch den Wind auf den Rotor einwirken würde. Im Betriebsfall ohne Störung arbeitet die Bremse somit gemäß dem Stand der Technik.

Ändert sich gemäß Fall b) die Drehbewegung des Rotorblattes 29 in Richtung Fahnenlage, bzw. in Richtung in der geringere Windleistung aufgenommen wird, dann wird die Spann- oder Stelleinrichtung für die Aktivierung der Haltebremse 10 wieder freigegeben und die Bremsnabe 33 wird mittels mindestens einer Feder 41 nicht mehr gegen den Bremsbelag 17 gedrückt. Dies geschieht durch Umkehr der Drehrichtung des eingetauchten Rades 35, indem das Bremsengehäuse 10 über den geschlossenen Reibbelag 17 in der Position verdreht wird, und so eine Drehbewegung der Räder 34 und 35 ermöglicht, wodurch die Spannung des Zugseiles 36 entfällt und die Bremsnabe 33 durch die Feder 41 wieder vom Bremsbelag 17 löst. Eine Zugfeder 48 kann die schleifende Bewegung des Angriffspunktes aufheben, und so die Bremsnabe 33 frei drehen lassen. Solange das Rad 34 mit dem Rad 35 und mit der damit über den Freilauf 42 verbundenen Wickeleinrichtung für das Zugseil 36 in dieser Richtung dreht, bleibt das Zugseil 36 in einer Stellung, bei der der Handbremshebel 49 über den Freilauf 42 nicht betätigt wird und der Freilauf 42 nach dem Lösen der Bremsnabe 33 die weitere Drehbewegung des Verschieberades 35 ermöglicht. Das Rotorblatt 29 ist somit freigegeben für die Drehung in Richtung der aerodynamisch den Rotor abbremsenden Position. Der Bremshebel 33 bleibt in Neutralstellung bis wieder ein neuer Zyklus beginnt.

Dadurch wird auch bei einem Ausfall aller Rotorblatt-Stellsysteme an einer Windenergieanlage erfindungsgemäß erreicht, dass der Rotor auf eine reduzierte Drehzahl abgebremst wird.

Damit kein hartes Anschlagen eines frei drehenden Rotorblattes 29 in der Fahnenlage stattfindet, wird eine Rotorblatt-Endlagenfeder 43 vorgeschlagen, die ein mechanisches Schließen der Bremse stattfinden lässt, sobald das Rotorblatt 29 in einem vordefinierten Bereich angekommen ist. Ein diesen Bereich identifizierender mechanischer Taster zieht oder drückt aktiv den Bremshebel 33, und das Rotorblatt 29 wird abgebremst. Die Abbremsung findet z. B. durch Verkürzung des Zugseils 36 zur Bremsenbetätigung statt. Vorteilhaft wird dazu ein Dämpfer verwendet, der z. B. nach einer Sekunde, bzw. nachdem das Rotorblatt 29 abgebremst wurde, das Zugseil 36 wieder freigibt.

Bis zum Wiedereinschalten des Antriebsystems in den Normalbetrieb ohne Störung, wird die Drehbewegung eines jeden Rotorblattes 29 in Richtung Arbeitsposition durch das systembedingt vorhandene Bremsmoment verhindert.

Diese Funktion der Feststellung einer stromlos offenen Haltebremse 10 kann auch vorteilhaft benutzt werden, um das Rotorblatt 29 für Transport, Wartung und Service unabhängig von einer Stromquelle festzuhalten, indem die Bremsnabe 33 durch mechanische Betätigung gegen den Reibbelag 17 gedrückt wird.

Sofern das Pitchsystem sich wieder im ungestörten Zustand befindet, wird der Elektromagnet 37 geschaltet, der das Verschieberad 35 außer Eingriff bringt. Gleichzeitig wird der Arretierungshebel 38 betätigt, für die Fixierung des Bremsengehäuses 10 durch das Zugseil 45 gegen die Feder 46. Damit das Bremsengehäuse 10 sich komplett in die Neutralstellung dreht und die Arretierung 38 einrasten kann, wird die Haltebremse 10 elektrisch aktiviert und mittels kurzem Motordrehmoment die Normalstellung des Bremsengehäuses 10 erreicht, in der die Arretierung 38 einrasten kann. Eine Zugfeder 44 am Bremsgehäuse 10 unterstützt die Bewegung des Bremsgehäuses 10 in die Neutralstellung. Der Stellantrieb 13 kann wieder seinen Normalbetrieb aufnehmen. Die Neutralstellung der Bremsenverstellung und/oder des Verschieberades 35 wird vorteilhaft mittels Sensor innerhalb des Pitch- oder Steuerungssystems überwacht.

Es ist logisch, dass die Seile 36, 45 durch Gestänge ersetzbar sind.

### Zusammenstellung der Bezugszeichen

10 - Haltebremse, Hauptbremse, Bremsengehäuse
10.1 - Schrauben
11 - Handlüfthebel
12 - Flanschplatte
13 - Stellmotor, Antrieb, Motorflansch
14 - Hubmagnet, Verschiebeeinrichtung
16 - Motorwelle
17 - Bremsbelag, Reibbelag
19 - kleine Feder
20 - Seil
21 - Verbindung
22 - Seilzug
23 - Kipphebel
24 - Verbindung
25 - starke Feder
26 - Hilfsfeder
27 - Seilzug
28 - Endlagentaster
29 - Rotorblatt
30 - Mitnehmer
31 - Anschlag
32 - Bremsenflansch
33 - Bremsnabe mit Verzahnung, Bremshebel
34 - Zahnrad oder Reibrad auf Motorwelle
35 - verschiebbares äußeres Rad, Verschieberad
36 - Zugseil
37 - Hubmagnet, Schubmagnet, Elektromagnet
38 - Arretierungshebel
39 - Verzahnung
40 - Feder
41 - Feder
42 - Freilauf
43 - Rotorblatt-Endlagenfeder
44 - Zugfeder am Bremsgehäuse
45 - Zugseil
46 - Feder
47 - Schleifkontakt, schleifende Verbindung
48 - Feder
49 - Handbremshebel
VR - Verschieberichtung äußeres Rad
DR - Drehbewegung Rotorblatt
DB - Drehbewegung Bremse
DBa - Drehbewegung Bremse auf
DBz - Drehbewegung Bremse zu

## Patentansprüche

1. Verfahren zur Abbremsung einer Windenergieanlage in einem Notfall durch Verstellung der Rotorblätter für Windenergieanlagen mit Leistungsregelung nach dem Prinzip der Pitchregelung oder Aktiv-Stallregelung und für jedes Rotorblatt mit mindestens einem Stellmotor mit kontinuierlichem Vergleich der Drehmomente der Antriebe gegeneinander und mit hinterlegten Grenzwerten für jeden Antrieb und mit mindestens einer Haltebremse die wahlweise nach dem Prinzip stromlos offen oder stromlos geschlossen ist zum Festhalten der Position eines Rotorblattes, und die kraftschlüssig oder reibschlüssig ist,
wobei eine Einrichtung für den Notfall besteht, um eine oder mehrere Haltebremsen (10) eines Rotorblattes, die ein Rotorblatt (29) gegen Verdrehung festhalten oder freigeben , in Abhängigkeit einer vorbestimmten Rotorblatt-Verstellrichtung und die mindestens eine Haltebremse (10) öffnet bzw. diese offen hält, sofern eine Drehbewegung in Richtung der Reduzierung der auf den Rotor übertragbaren Windleistung stattfindet, und im Falle einer nicht gewünschten Verstellrichtung die Haltebremse (10) bzw. die Haltebremsen (10) schließt bzw. schließen oder geschlossen hält bzw. halten, **dadurch gekennzeichnet,**
**dass** die Erkennung der anliegenden Drehmomentrichtung durch Verdrehen des Bremsengehäuses der Haltebremse (10) stattfindet.

2. Verfahren nach Anspruch 1,
**dadurch gekennzeichnet,**
**dass** für stromlos offene oder stromlos geschlossene Haltebremsen (10) ein redundantes mechanisch betätigtes Schließen der Haltebremsen (10) nach Betätigung mit einem Mittel das mit der Drehbewegung eines Rotorblatts (29) in Verbindung steht zur Positionserkennung im Bereich in dem das Rotorblatt (29) eine Stellung mit geringer Aufnahme der Windenergie besitzt erfolgt.

3. Verfahren nach einem der vorhergehenden Ansprüche,
**dadurch gekennzeichnet,**
**dass** mittels eines Hubmagneten (14) oder einer anderweitigen Verschiebeeinrichtung (14), die nach Abschaltung oder Freigabe eine Verriegelung freigibt, die ein Verdrehen des Gehäuses der Haltebremse (10) erlaubt oder, dass die Haltebremse (10) sich nach dem Öffnen der Verriegelung und dem damit ermöglichten Verdrehen des Gehäuses der Haltebremse (10) und das Betätigen des damit verbundenen Handlüfthebels (11) durch das Antriebsmoment des Stellmotors (13) in Richtung reduzierter Aufnahme der Windenergie selbst öffnet.

4. Verfahren nach einem der vorhergehenden Ansprüche,
**dadurch gekennzeichnet,**
**dass** mittels eines Hubmagneten (37) oder einer anderweitigen Verschiebeeinrichtung (37), die nach Abschaltung oder Freigabe eine Verriegelung (38) oder eine Blockierung (38) freigibt, die ein Verdrehen des Gehäuses der Haltebremse (10) bewirkt, und ein Reibbelag (17) geschlossen wird nachdem ein Rad (35) durch ein Rad (34) in die Richtung gedreht wird, in der ein Freilauf (42) nicht wirkt und somit einen Handbremshebel (49) ein Seil (36) zieht, und dass nach Umkehr der Drehrichtung einer Motorwelle (19) ein Handbremshebel (49) durch die Änderung der Drehrichtung am Rad (35) die Seilspannung am Seil (36) löst und den Reibbelag (17) durch eine Feder (41) wieder öffnet, und sich das Bremsengehäuse (10) mittels einer Feder (44) wieder in die Stellung Drehbewegung Bremse auf (DBa) dreht, und dass nach Betätigung des Magneten (37) die Verriegelung (38) gezogen wird durch einen Seilzug (45) und das Bremsengehäuse 10 somit wieder gegen verdrehen fixiert.

5. Verfahren nach einem der vorhergehenden Ansprüche,
**dadurch gekennzeichnet,**
**dass** eine Unterstützung der Abbremsung des Rotors auch bei Netzausfall stattfindet, indem eine Generatorbelastung zumindest zeitweise weiterhin erfolgt.

6. Verfahren nach einem der vorhergehenden Ansprüche,
**gekennzeichnet durch** folgende Merkmale:
- dass im Falle einer Störung eine Abschaltung eines Hubmagneten (14) an der stromlos geschlossenen Haltebremse (10) erfolgt und damit ein kleiner Drehwinkel am Gehäuse der Haltebremse (10) freigegeben wird, wobei bei einer Drehbewegung in Richtung Fahnenlage die Verdrehung des Gehäuses der Haltebremse (10) eine mechanisch erzwungene Lüftung der Bremse erzeugt und dies das Drehen der Rotorblätter (29) in Richtung der Fahnenlage ermöglicht,
- eine Verdrehung der geschlossenen Haltebremse (10) in Richtung Arbeitsposition lässt die Haltebremse (10) geschlossen und hält die aktuelle Position,
- sofern das Rotorblatt (29) eine Verstellung Richtung Arbeitsposition entwickelt, wird die drehbar gelagerte Haltebremse (10) bereits nach einer kleinen Drehbewegung wieder geschlossen, wobei die Rotorblatt-Drehbewegung gestoppt wird,
- sofern der Stellmotor (13) gegen die nicht geöffnete Haltebremse (10) arbeitet, löst der Stromrichter selbständig die Verriegelung aus, die das mechanische Lüften der Haltebremse (10) blockiert hatte, dazu wird der Hubmagnet (14) abgeschaltet, der im Normalbetrieb die Winkeldrehung der Haltebremse (10) blockiert, wobei auch durch das Motordrehmoment in Drehrichtung Fahnenlage eine mechanisch zwangsweise Lüftung der Haltebremse (10) entsteht und durch das Motormoment in diesem Fall einen Handlüfthebel (11) konstant in Stellung "gelüftet" zieht und somit erreicht wird, dass die elektrisch nicht zu öffnende Haltebremse (10) das Rotorblatt (29) in Richtung Fahnenlage nicht blockiert,
- sofern die Netzversorgung gewährleistet ist, wird im Bereich Fahnenlage der Hubmagnet (14) aktiviert und die Drehbewegung der Haltebremse (10) blockiert, wobei der Handlüfthebel (11) mittels einer Feder (25) in der neutralen Position gehalten wird und die Haltebremse (10) dann nur über den Hubmagnet (14) der Haltebremse (10) zu öffnen ist,
- zum Automatikstart der Anlage blockiert der Hubmagnet (14) den möglichen Drehwinkel der Haltebremse (10) und der Handlüfthebel (11) bleibt in Neutralstellung und die Haltebremse (10) somit nur elektrisch gelüftet.

7. Verfahren nach einem der Ansprüche 1 bis 5,
**dadurch gekennzeichnet,**
**dass** bei einem störungsfreien Betrieb bei Verwendung von mindestens einer stromlos offenen Haltebremse (10) ein verschiebbares äußere Rad (35) mittels eines Hub- oder Schubmagneten (37) außerhalb dem Eingriff zu einem Rad (34) gehalten wird, und das Rad (35) in Verbindung mit dem Rotorblatt 29 steht, wobei das Rad (34) auf der Motorwelle (16) eines Stellmotors (13) mit kraftschlüssiger Verbindung zur Bremsnabe (33) befestigt ist und im Störungsfall es zu einer Anlenkung des verschiebbaren Rades (35) durch die Kraft einer Feder (40) kommt, sobald diese von dem Elektromagneten (37) nicht mehr gehalten wird und gleichzeitig das Gehäuse der Haltebremse (10) in einem geringen Drehwinkel freigegeben wird, und der Elektromagnet das verschiebbare Rad (35) frei lässt und es somit zu einem Eingriff von Rad (35) in das Rad (34) kommt, was eine kraftschlüssige oder formschlüssige Verbindung zur Motorwelle (16) bewirkt und, dass bei dem Betriebsfall -drehen des Rotorblattes (29) in Richtung Arbeitsstellung- eine mögliche Drehbewegung der Motorwelle (16) in dieser Richtung dazu führt, dass ein Seilzug (36) einen Bremshebel (33) oder Bremsnabe (33) zieht, der nach Auslenkung den Reibbelag (17) der Haltebremse (10) schließt und, dass bei dem Betriebsfall -drehen des Rotorblattes (29) in die Richtung mit geringerer Leistungsaufnahme des Rotorblattes- die Spann- oder Stelleinrichtung für die Aktivierung der Haltebremse (10) freigegeben wird, indem durch Umkehr der Drehrichtung des eingetauchten Rades (35) das Bremsengehäuse (10) ein Drehwinkel in die Neutrallage ausführt und gleichzeitig zieht eine am Gehäuse des Bremsengehäuses (10) angebrachte Feder (41) dieses wieder in die Neutralstellung, sobald der oder die Bremsbeläge (17) frei sind und somit die Drehbewegung des Rotorblattes (29) für die Richtung der aerodynamischen Bremsung freigegeben ist.

8. Verfahren nach einem der vorhergehenden Ansprüche,
**dadurch gekennzeichnet,**
**dass** bei jedem Automatikstart der Anlage beim Anlauf für jedes Rotorblatt (29) ein Funktionstest der mechanischen Bremsenfreigage stattfindet, wobei dies in Abhängigkeit der Rotorstellung ausgeführt wird.

9. Verfahren nach Anspruch 7,
**dadurch gekennzeichnet,**
**dass** beim Versagen des Funktionstests eine Begrenzung des maximalen Pitchwinkels und der Rotordrehzahl erfolgt oder eine Abbremsung der Anlage erfolgt.

10. Einrichtung zur Durchführung des Verfahrens nach den Ansprüchen 1 bis 9 zur Abbremsung einer Windenergieanlage in einem Notfall durch Verstellung der Rotorblätter (29) für Windenergieanlagen mit Leistungsregelung nach dem Prinzip der Pitchregelung oder Aktiv-Stallregelung und für jedes Rotorblatt (29) mit mindestens einem Stellmotor (13) und mit mindestens einer Haltebremse (10) zum Festhalten der Position eines Rotorblattes (29),
**dadurch gekennzeichnet,**
**dass** der Stellmotor (13) mit einer Haltebremse (10) mit Bremsbelag (17) und einer Flanschplatte (12) kombiniert ist, das Gehäuse der Haltebremse (10) um einen bestimmten Winkel verstellbar ist, die Haltebremse (10) einen Handlüfthebel (11) bzw. einen Handbremshebel besitzt und die Flanschplatte (12) eine Verbindung (21) zu der Verschiebeeinheit (14) besitzt und entgegengesetzt zu der Verbindung (21) eine starken Feder (25) angeordnet ist, und zusätzlich mittels eines Seilzuges (27) eine mechanische Kopplung zu einem Endlagentaster (28) besitzt, der im Bereich eines Anschlages (31) des Rotorblattes (29) liegt und ein Mitnehmer (30) des Stellmotors (13) im Arbeitsbereich eines Kipphebels (23) liegt, der eine Verbindung mittels Seilzug (22) zur Verbindung (21) und eine Hilfsfeder (26), angeordnet zwischen Kipphebel (23) und Flanschplatte (12), besitzt.

11. Einrichtung nach Anspruch 10, **gekennzeichnet durch** folgende Merkmale:
- dass in Verbindung mit der Welle (16) des Stellmotors (13) eine Haltebremse (10) mit einem Reibbelag (17) angeordnet ist und die Haltebremse (10), mittels Schrauben (10.1) an einer Flanschplatte (12) befestigt ist, wobei die Flanschplatte (12) ein über den Gehäuseumfang der Haltebremse (10) hinausragendes Ende besitzt, an dem eine Hilfsfeder (26), eine starke Feder (25), eine der starken Feder (25) entgegenwirkende Verbindung (21) eines Hubmagneten (14) und ein Seilzug (27), der mit seinem anderen Ende mit einem Endlagentaster (28) verbunden ist, ein mit einer Ausbuchtung versehener scheibenförmiger Mitnehmer (30) angeordnet ist, der mit einem an der Haltbremse (10) gelagerten Kipphebel (23) korrespondiert, wobei der Kipphebel (23) eine Hilfsfeder (26) besitzt, die an ihrem anderen Ende an der Flanschplatte (12) befestigt ist und am Kipphebel (23) am Befestigungspunkt der Hilfsfeder (26) ein Seilzug (22) befestigt ist, der mit der Verbindung (21) des Hubmagneten (14) verbunden ist,
- dass die Bremse (10) einen Handlüfthebel (11) mit einer mit geringer Kraft in Neutralstellung ziehenden kleinen Feder (19) besitzt,
- dass die Flanschplatte (12) mit dem Gehäuse des Stellmotors (13) mittels mindestens einer festen Verbindung (24) drehbar verbunden ist und somit das Gehäuse der Haltbremse (10) um einen bestimmten Drehwinkel beweglich ist und
dass das Rotorblatt (29) einen Anschlag (31) korrespondierend mit dem Endlagentaster (28) besitzt.

12. Einrichtung nach Anspruch 10 und 11 mit einer stromlos offenen Haltebremse (10),
**gekennzeichnet durch** folgende Merkmale:
- dass jeder der vorhandenen Stellmotoren (19) auf der Welle (16) hinter der Haltebremse (10), deren Gehäuse eine Bremsbelag (17) besitzt, eine auf der Welle (16) verschiebbare Bremsnabe (33) mit einer Verzahnung (39) zur Welle (16) und Federn (41, 48) besitzt und weiterhin entweder ein Zahnrad (34) oder ein Reibrad (34) besitzt, in oder an das radial ein äußeres Rad (35) eintaucht oder angepresst wird und somit dieses äußere Rad (35) eine Drehbewegung aufnehmen kann und das Rad (34) eine Verbindung zum Rotorblatt (29) besitzt,
- dass das äußere Rad (35) mittels eines Elektromagneten (37) außerhalb dem Eingriff zu Rad (34) gehalten ist und als Gegenkraft zum Elektromagnet (37) eine Feder (40) angeordnet ist,
- dass ein Zugseil (36) an mindestens einem Punkt an der Bremsnabe (33) in Kontakt steht und über das verschiebbare und drehbare äußere Rad (35) und Umlenkpunkte geführt ist und an dem Zugseil (36) ein weiteres Zugseil (36) vorhanden ist, welches mit der Bremsnabe (33) und der Rotorblatt-Endlagenfeder (43) in Kontakt steht,
- dass am Bremsengehäuse (10) ein Arretierungshebel (38) angeordnet ist, der eine Feder (46) und ein Zugseil (45), geführt zwischen Arretierungshebel (38) und äußeres Rad (35) und durch den Elektromagneten (37) spannbar ist, besitzt und
- dass die Rotorblatt-Endlagenfeder (43) in Korrespondenz mit einem Anschlag am Rotorblatt (29) steht.

13. Einrichtung nach Anspruch 12,
**dadurch gekennzeichnet,**
**dass** der Handbremshebel (49) mit einem Freilauf (42) in Verbindung mit dem eintauchenden Rad (35) steht.

14. Einrichtung nach einem der Ansprüche 10 bis 13,
**dadurch gekennzeichnet,**
**dass** die erfindungsgemäße Einrichtung am Stellantrieb, am Getriebe an der Bremse (10) oder an dazwischenliegenden Punkten angeordnet ist und die Seile (20, 22, 27, 36, 45) zumindest teilweise durch Gestänge ersetzt sind.

## Claims

1. Method for slowing down a wind turbine in case of emergency, by adjusting the rotor-blades for wind turbines with power control based on the principle of pitch control or active stall control and for each of the rotor blades equipped with at least one actuator with continuous comparison of the torque of the actuator against each other, and with stored threshold values for each actuator, and with at least one position brake, which can be either passive or active in order to hold the position of a rotor blade, and which can be form-closed or frictionally.
**Characterized in that** an apparatus for emergency exists, to close or release one or more of the position-brakes (10) of a rotor blade, and can stop a rotor-blade (29) against rotation, or release it, depending on a predetermined turning direction of the rotor-blade, and opens, respectively keeps open one position-brake (10) at least, if rotating in the direction of reduced wind energy, is affecting at the rotor, and in case of an unwanted direction of rotation, closes or keeps closed the position-brake (10) resp. the brakes (10), **characterized in that** the detection of the actual direction of torque takes place by turning of the brake-housing (10).

2. Method according to claim 1,
**characterized in that** for the type of active position-brakes (10) or for the type of passive position-brakes (10) a redundant and mechanically activated closing of the position-brakes (10) is performed, after the activation by a device which is in connection with the rotation of a rotor-blade (29), and used for the detection of the position of the rotor blade (29) where a small wind-energy is generated.

3. Method according to one of the previous claims, **characterized in that**
by means of a solenoid (14) or any other kind of sliding device (14), which after the deactivation or release, releases a locking which allows the turning of the position-brake housing (10), or that the position brake (10) can open autonomously in the direction of reduced energy generation, after release of the interlock, allowing the brake housing (10) to turn, and the activation of the connected manual release lever (11) by the torque of the actuator (13), and so rotate the brake-housing (10) after release of the locking, and the actuation of the connected manual release-lever (11) by the torque of the actuator (13).

4. Method according to one of the previous claims, **characterized in that** via a solenoid (37) or any kind of sliding device (37), which, after deactivation or release, releases an interlock (38) or deadlock(38), which causes the position brake housing (10) to turn, and a friction lining (17) is active after a wheel (35) is turned by a wheel (34) in the direction, in which no freewheel (42) takes effect, thus causing a rope (36) to pull on a manual brake lever (49), and that after reversion of the motor-shaft (19) direction of rotation, a hand-brake lever (49) loosens the tension on the rope (36) by changing of the rotational direction of the wheel (35) and thus opening the friction lining (17) by a spring (41), and the housing of the position brake (10) is turned by a spring (44) back to the position of brake open (DBa), and after activation of the solenoid (37) the locking device (38) is being pulled by cable (45) and consequently fixing the position brake (10) against turning.

5. Method according to one of the previous claims, **characterized in that** the support of slowing-down the rotor in case of mains failure can also happen by keeping up the load on the generator, at least temporarily.

6. Method according to one of the previous claims, **characterized by** following features:
- in case of malfunction a deactivation of a solenoid (14) at the passive position brake (10) is executed, and thus releasing a small angle of rotation at the housing of the position brake (10), where with a rotational movement in the direction of vane-position, a turn of the position-brake housing (10) causes a mechanically enforced release of the brake, and thus enables the rotation of rotor-blades (29) in the direction of the vane-position,
- a rotation of the closed position-brake (10) in direction of working position, keeps the position-brake (10) closed, and holds the current position,
- provided that the rotor blade (29) generates a rotational movement in direction of working position, the pivoted position-brake (10) is being already closed again after a small turn, thus stopping the rotor blade turning,
- provided that the actuator (13) operates, against the not open position brake (10), the converter deactivates the locking device independently, which has blocked the mechanical releasing of the position-brake (10), therefore the solenoid (14), which in normal operation blocks the angular turn of the position brake (10), will be switched off, whereby, also via the motor torque in direction of vane position, a mechanically enforced release of the position-brake (10) occurs, and via the motor torque in this case pulls a manual release lever (11) permanently into "open" position, thus accomplishing that the position brake (10), which cannot be released electrically, can't block the rotor blade (29) in direction of vane position,
- provided that the mains supply is ensured, the solenoid (14) is activated in the zone of vane-position, and turning of the position brake (10) is blocked, whereby the manual release lever (11) is kept in neutral position via a spring (25), and the position brake (10) then being only releasable via the solenoid (14) at the position brake (10),
- For an automatic start of the wind turbine the solenoid (14) blocks the possible rotational angle of the position-brake (10) and the manual release lever (11) remains in neutral position, thus releasing the position brake (10) can only be done electrically.

7. Method according to one of the claims 1 to 5,
**characterized in that** at an operation free of error, when using at least one active position-brake (10), a movable outer wheel (35) is held outside the contact with a wheel (34), by means of a lifting or pushing magnet (37), and the wheel (35) is in contact with the rotor-blade (29) while the wheel (34) is fixed on the motor shaft (16) of an actuator (13), and in frictionally connection to the brake-hub (33), and in case of an error a contact to the movable wheel (35) by force of a spring (40) is realized when not held any longer by the solenoid (37), and simultaneously the brake housing (10) is released at a slight rotational angle, and the solenoid releases the movable wheel(35), which causes the contact of the wheel (35) with wheel (34), which causes a frictional or interlocking connection to the motor shaft (16), and in the operation mode - rotation of the rotor blade (29) in direction of working-position - a possible rotation of motor shaft (16) in this direction is causing a pull of a brake-lever (33) or brake-hub (33) by a cable (36), and that in operation mode - turn of the rotor blade (29) in direction of lower energy generation by the rotor blade - the tensioning or the actuating device for activation of the position-brake (10) is released, by changing the direction of rotation of the contacted wheel (35), the housing of the position brake (10) executes a rotation angle into neutral position, and simultaneously a spring (41) on the brake housing (10) is pulling it again into the neutral position, as soon as the friction lining/s (17) is/are released and thereby the rotation of the rotor-blade (29) has been released into the direction of aerodynamic braking.

8. Method according to one of the previous claims,
**characterized in that** with each automatic start-up of the wind turbine, a function check of the mechanical brake-release for each rotor blade (29) during the start-up is executed, whereby it is depending on the rotor position.

9. Method according to claim 7,
**characterized in that** a malfunction of the function check causes a limitation of the maximum pitch-angle, and the rotational speed of the rotor, or a slow-down of the wind turbine.

10. Apparatus for the execution of the method to slow down a wind turbine in a case of emergency by pitching the rotor blades (29) for wind turbines with power control according to the principle of pitch-control or active stall control, and for each rotor blade (29) with at least one actuator (13) and at least one position brake (10) for keeping the position of a rotor-blade (29), **characterized in that** the actuator(13) is connected with a position-brake (10) equipped with friction lining (17) and a flange (12), the housing of the position brake (10) can be adjusted by a certain angle, the position-brake (10) possesses a manual release-lever (11), resp. a manual brake-lever, and the flange (12) owns connection (21) to the sliding device (14), and a strong spring (25) is arranged in the opposite direction of the connection device (21), and additionally by a cable (27) a mechanical coupling with an end-position probe (28) exists, which is installed next to a blocking device (31) of the rotor blade (29), and a cam (30) of the actuator (13), is available in the range of a rocker lever (23), which is connected by cable (22) to the connecting-device (21), and an auxiliary spring (26), is arranged between rocker-lever (23) and flange (12).

11. Apparatus according to claim 10, **characterized by** following features:
- there is a position-brake (10) with a friction lining (17) in connection with the motor shaft (16) of the actuator (13), and the position brake (10) is fixed on a flange (12) with screws (10.1), whereby the flange (12) has an end which is taller than the housing of the position-brake (10), at which an auxiliary spring (26), operates in the opposite direction of strong spring (25), existing connection (21) of a solenoid (14) and a cable (27), which has its other end connected to a end-position probe (28), a disk-shaped carrier (30) with a bulge is arranged, which corresponds to a rocker lever (23) connected with the position brake (10), whereby the rocker-lever (23) has an auxiliary spring (26), which is connected to the flange (12) at the second end, and a rope (22) attached to the anchorage point of the auxiliary spring (26) at the rocker lever (23), which is linked to the connection (21) of the solenoid (14),
- that the brake (10) has a manual release lever (11) with a small spring (19) pulling with low force towards neutral position,
- that the flange (12) is rotatable connected to the housing of the actuator (13) with at least one fixed connection (24), thus enabling the position-brake housing (10) for a certain angle of rotation, and the rotor blade (29) has a blocking device (31) corresponding with the end-position probe (28).

12. Apparatus according to claim 10 and 11 with an active position brake (10),
**characterized by** following features:
- that each of the existing actuators (19) on its shaft (16) behind the position-brake (10), has a friction lining (17) on its housing, at the shaft (16) there is a slidable brake-hub (33) with a gearing (39) to the shaft (16) and springs (41, 48), and furthermore containing either a cogged wheel (34) or a friction wheel (34), which is dipped or pressed on an outer wheel (35), thus the outer wheel (35) can take a rotational movement and the wheel (34) has a connection to the rotor blade (29),
- that the outer wheel (35) is held outside of the influence of the wheel (34) via a solenoid (37), and as a counterforce to the solenoid (37) there is a spring (40) attached,
- that a rope (36) has contact to at least one spot at the brake-hub (33), and is guided by the movable and rotatable outer wheel (35), and the redirection points, and the rope (36) is attached with a further rope (36), which is connected to the brake-hub (33) and with the rotor-blade end-position spring (43),
- that at the brake-housing (10) a locking lever (38) is arranged, having a spring (46) and a cable (45) guided between the locking lever (38) and external wheel (35), and is tension-able by the solenoid (37), and
- that the rotor-blade end-position spring (43) is in correspondence with a blocking device of the rotor-blade (29) .

13. Apparatus according to claim 12, **characterized in that** the brake hand-lever (49) with a freewheel (42), comes in connection with the wheel (35).

14. Apparatus according to a claim 10 to 13, **characterized in that** the inventive device is arranged at the actuator, on the gearbox, on the brake (10), or at intermediate points, and the cables (20, 22, 27, 36, 45) are at least partially replaced by linkages.

## Revendications

1. Procédure pour le freinage d'une éolienne en cas d'urgence par le réglage des pales de rotor pour les éoliennes avec contrôle de puissance selon le principe de la régulation au pas ou la régulation par décrochage active et pour chaque pale de rotor avec au minimum un servomoteur avec comparaison continuelle des couples des entraînements les uns avec les autres et avec les valeurs consigne limites pour chaque entraînement et avec au minimum un frein de maintien qui sélectivement selon le principe est ouvert hors tension ou fermé hors tension pour le maintien de la position d'une pale de rotor et qui est solidaire en rotation ou solidaire en friction, dans lequel un dispositif existe pour l'urgence, afin d'enclencher un ou plusieurs freins de maintien (10) d'une pale de rotor, qui maintient ou autorise une pale de rotor (29) contre la rotation, en fonction d'un dispositif de réglage de la pale de rotor prédéterminé et qui ouvre ou maintient ouvert au minimum un frein de maintien (10), à condition qu'un mouvement de rotation ait lieu dans le sens de la réduction de la puissance éolienne transmise sur le rotor, et qui, dans le cas d'un sens de rotation non souhaité, ferme ou maintient fermé le frein de maintien (10) ou les freins de maintien (10), **caractérisé en ce que** la reconnaissance du sens du couple tangent a lieu par la torsion du boîtier de freinage du frein de maintien (10).

2. Procédé selon la revendication 1, **caractérisé en ce que** pour les freins de maintien ouverts hors tension ou fermés hors tension (10) une fermeture à actionnement mécanique redondant des freins de maintien (10) a lieu après actionnement avec un moyen qui est en relation avec le mouvement de rotation d'une pale de rotor (29) pour détecter la position dans la zone dans laquelle la pale de rotor (29) possède une position avec une prise faible de l'énergie éolienne.

3. Procédé selon l'une des revendications précédentes, **caractérisé en ce qu'**au moyen d'un aimant de levage (14) ou d'un autre dispositif de déplacement (14), qui autorise un verrouillage, après arrêt ou autorisation, qui permet une torsion du boîtier du frein de maintien (10) ou que le frein de maintien (10) s'ouvre lui-même après l'ouverture du verrouillage et la torsion rendue ainsi possible du boîtier du frein de maintien (10) et de l'actionnement du levier de déblocage manuel (11) par le couple d'entraînement du servomoteur (13) dans le sens d'une prise réduite à l'énergie éolienne.

4. Procédé selon l'une des revendications précédentes, **caractérisé en ce qu'**au moyen d'un aimant de levage (37) ou un autre dispositif de déplacement (37), qui autorise, après arrêt ou autorisation, un verrouillage (38) ou un blocage (38), qui entraîne une torsion du boîtier du frein de maintien (10), et qu'une garniture de friction (17) soit fermée, après qu'une roue (35) soit tournée par une roue (34) dans la direction dans laquelle une roue libre (42) n'agit pas et qu'ainsi un levier de freinage manuel (49) tire une corde (36) et qu'après l'inversion du sens de rotation d'un arbre moteur (19), un levier de freinage manuel (49) desserre la tension dans la corde de la corde (36) par la modification du sens de rotation sur la roue (35) et ouvre à nouveau la garniture de friction (17) par un ressort (41) et que le boîtier du frein (10) tourne à nouveau dans la position du mouvement de rotation frein ouvert (DBa) au moyen d'un ressort (44) et qu'après l'actionnement de l'aimant (37), le verrouillage (38) est tiré par une traction de la corde (45) et que le boîtier de frein 10 fixe ainsi à nouveau contre une torsion.

5. Procédé selon l'une des revendications précédentes, **caractérisé en ce qu'**un soutien du freinage du rotor a également lieu lors d'une panne de courant, une charge du générateur continuant de s'effectuer au moins par intermittence.

6. Procédé selon l'une des revendications précédentes, **caractérisé par** les caractéristiques suivantes :
que dans le cas d'une défaillance, un arrêt d'un aimant de levage (14) a lieu sur le frein de maintien (10) fermé sans courant et pour qu'un petit angle de rotation sur le boîtier du frein de maintien (10) est autorisé, la rotation du boîtier du frein de maintien (10) produisant une aération mécanique forcée du frein lors d'un mouvement de rotation dans le sens de la position des drapeaux et que cela permet la rotation des pales de rotor (29) dans le sens de la position des drapeaux,
- une rotation du frein de maintien fermé (10) dans la direction de la position de travail garde le frein de maintien (10) fermé et maintient la position actuelle,
- pour autant que la pale de rotor (29) réalise un réglage dans la direction de la position de travail, le frein de maintien (10) logé de manière tournante est déjà fermé après un petit mouvement de rotation, arrêtant le mouvement de rotation de la pale du rotor,
- pour autant que le servomoteur (13) fonctionne contre le frein de maintien (10) non-ouvert, le convertisseur de courant déclenche de manière autonome le verrouillage, qui avait bloqué l'aération mécanique du frein de maintien (10), pour cela l'aimant de levage (14) est éteint, ce qui bloque la rotation de l'angle du frein de maintien (10) dans le fonctionnement normal, une aération mécanique forcée du frein de maintien (10) ayant également lieu par le couple moteur dans le sens de rotation de la position des drapeaux et qui tire dans ce cas le levier d'aération manuelle (11) constamment dans la position « aérée » grâce au couple du moteur et cela permet d'atteindre que le frein de maintien (10) ne pouvant être ouvert électriquement ne bloque pas la pale de rotor (29) dans la direction de la position des drapeaux,
- dans lequel tant que l'alimentation secteur est garantie, l'aimant de levage (14) est activé dans la zone de position de drapeaux et le mouvement de rotation du frein de maintien (10) est bloqué, le levier d'aérateur manuel (11) étant maintenu dans la position neutre au moyen d'un ressort (25) et le frein de maintien (10) est alors seulement à ouvrir via l'aimant de levage (14) du frein de maintien (10),
- pour le démarrage automatique de l'installation, l'aimant de levage (14) bloque l'angle de rotation possible du frein de maintien (10) et le levier d'aérateur manuel (11) reste dans la position neutre et le frein de maintien (10) est ainsi uniquement aéré électriquement.

7. Procédé selon l'une des revendications 1 à 5, **caractérisé en ce que** lors du fonctionnement sans perturbations lors de l'utilisation d'au minimum un frein de maintien (10) ouvert hors tension, une roue extérieure déplaçable (35) au moyen d'un aimant de levage ou de poussée (37) en dehors de l'intervention dans une roue (34), et que la roue (35) est en liaison avec la pale de rotor 29, la roue (34) sur l'arbre du moteur (16) d'un servomoteur (13) avec une liaison solidaire en rotation avec le moyeu de frein (33) et en cas de panne, si un raccordement de la roue déplaçable (35) par la force d'un ressort (40) doit avoir lieu, dès que celui-ci n'est plus maintenu par l'électroaimant (37) et que le boîtier du frein de maintien (10) est autorisé simultanément dans un angle de rotation faible, et que l'électroaimant libère la roue déplaçable (35) et qu'ainsi une intervention de la roue (35) dans la roue (34) a lieu, ce qui entraîne une liaison solidaire ou à forme finale avec l'arbre du moteur (16) et, dans le cas de fonctionnement - rotation de la pale de rotor (29) dans le sens d'une position de travail - un mouvement de rotation possible de l'arbre du moteur (16) dans ce sens conduit à ce qu'une traction de corde (36) tire un levier de freinage (33) ou un moyeu de frein (33), qui ferme le frein de maintien (10) après la déviation d'une garniture de friction (17) et, qu'en cas de fonctionnement - rotation de la pale de rotor (29) dans le sens d'une puissance absorbée inférieure de la pale du rotor - le dispositif de tension ou de commande est activé pour l'activation du frein de maintien (10), le boîtier du frein (10) exécutant un angle d'inclinaison dans la position neutre par l'inversion du sens de rotation de la roue immergée (35) et simultanément, un ressort (41) monté sur le boîtier du boîtier de frein (10) tire celui-ci à nouveau dans la position neutre, dès que la ou les garnitures de friction (17) sont libres et qu'ainsi le mouvement de rotation de la pale de rotor (29) est autorisé dans le sens du freinage aérodynamique.

8. Procédé selon l'une des revendications précédentes, **caractérisé en ce que** lors de chaque démarrage automatique de l'installation lors du démarrage de chaque pale de rotor (29), un test de fonctionnement de l'activation mécanique du frein a lieu, cela étant exécuté en fonction de la position du rotor.

9. Procédé selon la revendication 7, **caractérisé en ce que** lors de l'échec du test de fonctionnement, une limitation de l'angle de pas maximal et de la vitesse de rotation a lieu ou un ralentissement de l'installation a lieu.

10. Dispositif pour la réalisation du procédé selon les revendications 1 à 9 pour le freinage d'une installation d'énergie éolienne en cas d'urgence par le réglage des pales de rotor (29) pour les installations d'énergie éolienne avec le réglage de la performance selon le principe du réglage à pas ou de décrochage aérodynamique actif et pour chaque pale de rotor (29) avec au minimum un servomoteur (13) et au minimum un frein de maintien (10) pour le maintien de la position d'une pale de rotor (29), **caractérisé en ce que** le servomoteur (13) est combiné avec un frein de maintien (10) avec garniture de friction (17) et une plaque de bridage (12), que le boîtier du frein de maintien (10) est réglable selon un certain angle, le frein de maintien (10) possède un levier d'aérateur manuel (11) ou un levier de freinage manuel et la plaque de bridage (12) possède une liaison (21) avec l'unité de déplacement (14) et un ressort puissant (25) est agencé à l'opposé de la liaison (21), et en plus il possède un accouplement mécanique avec la touche de position de fin de course (28) au moyen d'un câble (27), qui se situe dans la zone de la butée (31) de la pale de rotor (29) et un entraîneur (30) du servomoteur (13) se situe dans la zone de travail d'un levier basculant (23), qui possède une liaison au moyen du système de poulie (22) avec la liaison (21) et un ressort de renfort (26), ordonné entre le levier basculant (23) et la plaque de bridage (12).

11. Dispositif selon la revendication 10, **caractérisé par** les caractéristiques suivantes :
- qu'en combinaison avec l'arbre (16) du servomoteur (13) un frein de maintien (10) est agencé avec une garniture de friction (17) et le frein de maintien (10), fixé sur une plaque de bridage (12) au moyen de vis (10.1), la plaque de bridage (12) possédant une extrémité dépassant la périphérie du boîtier du frein de maintien (10), sur lequel un ressort de renfort (26), un ressort puissant (25), la liaison opposée (21) d'un des ressorts puissants (25) quant à l'aimant de levage (14) et un câble (27), qui est relié avec une touche de position de fin de course (28) avec son autre extrémité, agencé avec un entraîneur (30) en forme de disque pourvue d'une saillie, qui correspond à un levier basculant (23) articulé sur le frein de maintien (10) le levier basculant (23) possédant un ressort de renfort (26), qui est fixé à l'autre extrémité de la plaque de bridage (12) et un câble (22) est fixé sur le levier basculant (23) sur le point de fixation du ressort de renfort (26), qui est relié avec la liaison (21) de l'aimant de levage (14),
- que le frein (10) possède un levier d'aérateur manuel (11) avec un petit ressort (19) tirant en position neutre avec une force faible,
- que la plaque de bridage (12) est reliée de manière pivotante avec le boîtier du servomoteur (13) au moyen de minimum une liaison fixe (24) et qu'ainsi le boîtier du frein de maintien (10) est mobile selon un angle de rotation particulier et que la lame de rotor (29) possède une butée (31) correspondant à la touche de position de fin de course (28) .

12. Dispositif selon les revendications 10 et 11 avec un frein de maintien (10) ouvert hors tension, **caractérisé par** les caractéristiques suivantes :
- que chacun des servomoteurs (19) existant sur l'arbre (16) derrière le frein de maintien (10), dont le boîtier possède une garniture de friction (17), un moyeu de frein (33) déplaçable sur l'arbre (16) avec une denture (39) reliée à l'arbre (16) et aux ressorts (41, 48) et possède en outre soit une roue dentée (34) soit une roue de friction (34), qui plongent ou sont pressées de manière radiale dans ou sur la roue extérieure (35) et ainsi cette roue extérieure (35) peut assimiler un mouvement de rotation et la roue (34) possédant une liaison avec la pale de rotor (29),
- que la roue extérieure (35) est maintenue sur la roue (34) en-dehors de l'intervention au moyen d'un électroaimant (37) et qu'un ressort (40) est agencé en tant que force contraire à l'électroaimant (37),
- qu'un câble (36) est en contact au minimum à un point sur le moyeu de freinage (33) et est conduit via la roue extérieure (35) déplaçable et pivotante et le point de déviation et qu'un câble supplémentaire (36) est disponible sur le câble (36), qui est en contact avec le moyeu de freinage (33) et le ressort de fin de course (43) de la pale de rotor,
- qu'un levier de blocage (38) est agencé sur le boîtier de frein (10), qui possède un ressort (46) et un câble (45), conduit entre le levier de blocage (38) et la roue extérieure (35), et peut être tendu par les électroaimants (37) et
- que le ressort de fin de course (43) de la pale de rotor se situe en correspondance avec une butée sur la pale de rotor (29) .

13. Dispositif selon la revendication 12, **caractérisé par le fait que**, le levier de freinage manuel (49) se situe avec une roue libre (42) en combinaison avec une roue plongeante (35).

14. Dispositif selon une des revendications 10 à 13, **caractérisé par le fait que** le dispositif conforme à l'invention est agencé sur l'actionneur, sur l'entraînement sur le frein (10) ou sur les points se situant entre et que les câbles (20, 22, 27, 36, 45) sont partiellement remplacés par des timoneries.
